# EUROPEAN PATENT APPLICATION

(11) **EP 1 672 496 A2**
(43) Date of publication of application: **21.06.2006**
(21) Application number: 05027609.6
(22) Date of filing: 16.12.2005
(51) Int. Cl.: G06F 9/46

(54) **Context save method, information processor and interrupt generator**

(30) Priority: 17.12.2004 JP 2004366695
(71) Applicant: NEC Corporation, Minato-ku Tokyo (JP)
(72) Inventor: Takemori, Yasushi, Minato-ku, Tokyo (JP)
(74) Representative: Vossius & Partner

(57) **Abstract**

A context save method, an information processor and an interrupt generator for restoring, after a reset of a CPU, CPU context information such as the interrupt acceptance state of the CPU before the CPU reset. An interrupt controller stores CPU context information set in a CPU in a memory before resetting the CPU. After the reset of the CPU, the interrupt controller reads out the CPU context information stored in the memory. The interrupt controller feeds interrupt acceptance information contained in the CPU context information to the interrupt generator. The interrupt generator generates an interrupt corresponding to the input information. Besides, the interrupt controller sets the CPU context information except for the interrupt acceptance information in the CPU.

## Description

The present invention relates to a context save method, an information processor and an interrupt generator for restoring, after a reset of a CPU, context information such as the interrupt acceptance state of the CPU before the CPU reset.

In the CPU (Central Processing Unit), when a reset signal is input, CPU context information such as interrupt acceptance information is set to a default. Accordingly, information as to an interrupt or the like that occurs before a reset is lost after the reset.

In Japanese Patent Application laid open No. 2003-162432 (pp. 3-4, Fig. 2), there is disclosed an apparatus which records interrupt signals to determine which types of interrupts have occurred.

The apparatus, however, only records interrupt signals, and is not capable of restoring context information in a CPU to the state before a reset of the CPU.

It is therefore an object of the present invention to provide a context save method, an information processor and an interrupt generator for restoring, after a reset of a CPU, CPU context information such as the interrupt acceptance state of the CPU before the CPU reset.

In accordance with the first aspect of the present invention, to achieve the object mentioned above, there is provided a context save method comprising the steps of storing CPU context information set in a CPU in a memory, reading out the CPU context information stored in the memory after the CPU is reset, feeding interrupt acceptance information (information as to interrupts that have been accepted by the CPU) contained in the CPU context information read out of the memory to an interrupt generator to generate an interrupt corresponding to the interrupt acceptance information, and setting the CPU context information except for the interrupt acceptance information in the CPU.

In accordance with the second aspect of the present invention, there is provided an information processor comprising a memory for storing CPU context information, an information reader for reading out the CPU context information stored in the memory after the CPU is reset, an information input section for receiving as input interrupt acceptance information contained in the CPU context information read out of the memory, an interrupt issuer for issuing an interrupt corresponding to the interrupt acceptance information, and an information set section for setting the CPU context information except for the interrupt acceptance information in the CPU.

In accordance with the third aspect of the present invention, there is provided an interrupt generator comprising an information input section for receiving as input interrupt acceptance information contained in CPU context information that is stored in a memory before a CPU reset and read out of the memory after the CPU reset, and an interrupt issuer for issuing an interrupt corresponding to the interrupt acceptance information.

As is described above, in accordance with the present invention, it is possible to restore, after a reset of a CPU, CPU context information such as the interrupt acceptance state of the CPU before the CPU reset.

The exemplary aspects and features of the present invention will become more apparent from the consideration of the following detailed description taken in conjunction with the accompanying drawings in which:
Fig. 1 is a diagram showing an example of the construction of an information processor according to an embodiment of the present invention; and
Fig. 2 is a flowchart for explaining the context information restoration process.

Referring now to the drawings, a description of a preferred embodiment of the present invention will be given in detail.

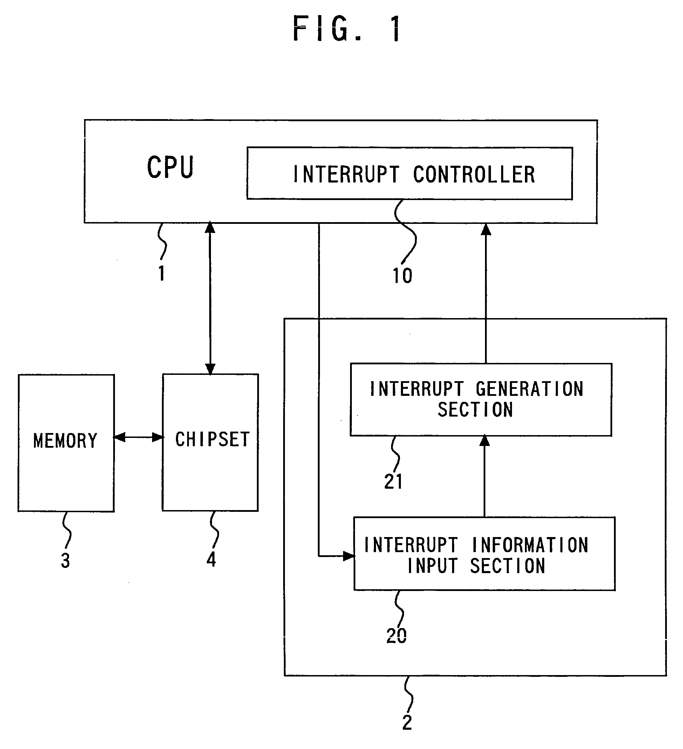

Fig. 1 is a diagram showing an example of the construction of an information processor according to an embodiment of the present invention. Referring to Fig. 1, the information processor includes a CPU (Central Processing Unit) 1, an interrupt generator 2. a memory 3, and a chipset 4. The chipset 4 is a general chipset, such as northbridge/southbridge chipset, and connected to the CPU 1 and the memory 3.

The CPU 1 includes an interrupt controller 10. The interrupt controller 10 is implemented by executing a program stored in the memory 3.

The interrupt generator 2 is a circuit including an interrupt information input section 20 and an interrupt generation section 21, and connected to the CPU 1.

Upon detecting the state in which the CPU 1 needs to be reset, the interrupt controller 10 causes the CPU 1 to be disabled for interruption. Subsequently, the interrupt controller 10 stores in the memory 3 CPU context information including such information as interrupt acceptance information (information as to interrupts that have been accepted by the CPU 1 at that point) to reset the CPU 1. After the reset of the CPU 1, the interrupt controller 10 reads the CPU context information including the interrupt acceptance information and the like from the memory 3. The interrupt controller 10 extracts the interrupt acceptance information from the CPU context information to input it to the interrupt information input section 20 of the interrupt generator 2. The interrupt acceptance information includes, for example, flag data that specifies the content (type) of an interrupt received by the CPU 1.

In addition, the interrupt controller 10 rewrites the CPU context information except for the interrupt acceptance information to a specified area in the CPU 1 to release the interrupt disabled state.

The interrupt information input section 20 receives the interrupt acceptance information from the interrupt controller 10 of the CPU 1, and instructs the interrupt generation section 21 to generate an interrupt corresponding to the interrupt acceptance information.

The interrupt generation section 21 issues an interrupt to the CPU 1 according to the instruction from the interrupt information input section 20.

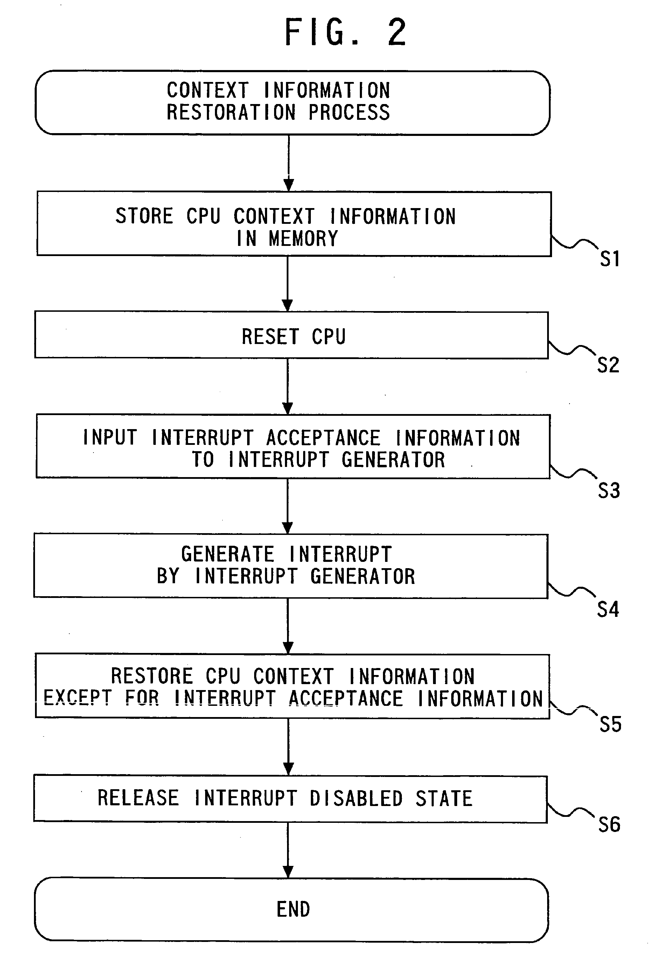

Fig. 2 is a flowchart for explaining the context information restoration process. Referring to Fig. 2, a description will be made of the operation of the information processor of this embodiment to restore context information. Incidentally, in the following description, it is assumed that, for example, in a duplex system, the CPU 1 of each system is reset to synchronize two systems. The duplex system may be provided with two systems each including the information processor of this embodiment, and a detector connected to the two information processors for monitoring the CPUs 1 of the respective systems to detect the difference therebetween.

During the normal operation of the system, in each information processor, an interrupt controller of the chipset 4 issues an interrupt to the CPU 1. The CPU 1 stores therein information as to interrupts which the CPU 1 has received, and sequentially executes processing. When a difference occurs between the operation of the respective CPUs 1 of the two systems while the CPUs 1 have received some interrupts during the operation of system, the detector detects the difference. Thereby, the detector sends an information signal to the CPU 1 of each information processor.

In response to the receipt of the information signal, the interrupt controller 10 causes the CPU 1 to terminate receiving an interrupt. In addition, the interrupt controller 10 stores in the memory 3 CPU context information including such information as the interrupt acceptance state of the CPU 1 at that point, i.e., information as to interrupts that the CPU 1 has accepted at that point (step S1).

Next, the interrupt controller 10 resets the CPU 1 to synchronize the operation of the CPUs 1 in the two systems (step S2).

After that, the interrupt controller 10 reads the CPU context information including the interrupt acceptance information and the like from the memory 3. The interrupt controller 10 inputs the interrupt acceptance information to the interrupt generator 2 (step S3).

Having received the interrupt acceptance information, the interrupt information input section 20 of the interrupt generator 2 causes the interrupt generation section 21 to generate a pseudo interrupt corresponding to the interrupt acceptance information (step S4).

Accordingly, the CPU 1 receives an interrupt request, and sets the interrupt acceptance information in the register. As a result, the interrupt acceptance state before the reset is restored in the CPU 1.

Besides, the interrupt controller 10 sets the CPU context information, except for the interrupt acceptance information, read out of the memory 3 in step S3 in each register of the CPU 1 (step S5).

The interrupt controller 10 releases the interrupt disabled state (step S6). Thereby, the CPU 1 of each system can restart the operation in the same environment before it terminated receiving an interrupt.

As set forth hereinabove, in accordance with the present invention, it is possible to restore, after a reset of a CPU, CPU context information such as the interrupt acceptance state of the CPU before the CPU reset. Since interrupt acceptance information is stored in a read-only register, information read out of a memory has not been able to be directly written to the CPU. However, according to the present invention, the interrupt generator generates a pseudo interrupt, and therefore, the interrupt acceptance information can be restored to the state before the reset.

While one preferred embodiment of the present invention has been shown, it is not so limited but is susceptible of various changes and modifications without departing from the scope and spirit of the present invention.

In the above description of the context information restoration process, it is assumed that the CPU 1 needs to be reset because of a difference detected between the CPUs 1 of the two systems in a duplex system. The condition where a CPU reset is necessary is not limited to the above case. For example, a CPU may be reset when any failure occurs therein during the operation of the system, or when a sign of failure is detected. Additionally, in the case where the settings in a CPU are changed during the operation of the system and the CPU is reset to reflect the change, the CPU context information may be saved and restored in the manner described above.

Further, in the above embodiment, while the interrupt generator 2 is separated from the chipset 4, the chipset 4 may have a function of the interrupt generator 2.

Incidentally, the present invention is applicable not only to a dedicated system but also to an ordinary computer system. For example, the information processor, interrupt generator 2 or the like that operates as previously described may be implemented by a program for executing the above processing. In this case, the program may be stored in a computer readable storage medium such as a floppy disk, a CD-ROM (Compact Disc Read Only Memory), and a DVD (Digital Versatile Disc), and delivered to a computer to be installed therein. Or, the program may be stored in a disk storage of a server on a network such as the Internet, and, for example, downloaded to a computer.

In the case where the aforementioned functions are provided by OSs (Operating Systems) or a combination of an OS and an application, the functions except for the part provided by the OS may be stored in a storage medium to be delivered, or may be downloaded to a computer.

While the present invention has been described with reference to the particular illustrative embodiment, it is not to be restricted by the embodiment but only by the appended claims. It is to be appreciated that those skilled in the art can change or modify the embodiment without departing from the scope and spirit of the present invention.

## Claims

1. A context save method comprising the steps of:
storing CPU context information set in a CPU in a memory;
reading out the CPU context information stored in the memory after the CPU is reset;
feeding interrupt acceptance information contained in the CPU context information read out of the memory to an interrupt generator to generate an interrupt corresponding to the interrupt acceptance information; and
setting the CPU context information except for the interrupt acceptance information in the CPU.

2. An information processor comprising:
a memory for storing CPU context information;
an information reader for reading out the CPU context information stored in the memory after the CPU is reset;
an information input section for receiving as input interrupt acceptance information contained in the CPU context information read out of the memory;
an interrupt issuer for issuing an interrupt corresponding to the interrupt acceptance information; and
an information set section for setting the CPU context information except for the interrupt acceptance information in the CPU.

3. An interrupt generator comprising:
an information input section for receiving as input interrupt acceptance information contained in CPU context information that is stored in a memory before a CPU reset and read out of the memory after the CPU reset; and
an interrupt issuer for issuing an interrupt corresponding to the interrupt acceptance information.
